# EUROPÄISCHE PATENTSCHRIFT

(11) **EP 4 035 141 B1**
(45) Veröffentlichungstag und Bekanntmachung des Hinweises auf die Patenterteilung: **09.09.2026**
(21) Anmeldenummer: 20751482.9
(22) Anmeldetag: 27.07.2020
(51) Int. Cl.: G08G 1/16, G05D 1/00

(54) **VERFAHREN ZUM ZUMINDEST ASSISTIERTEN EINFÄDELN EINES KRAFTFAHRZEUGS IN EINEN FAHRSTREIFEN**
METHOD FOR THE AT LEAST ASSISTED MERGING OF A MOTOR VEHICLE INTO A TRAFFIC LANE
PROCÉDÉ DE FUSION AU MOINS ASSISTÉE D'UN VÉHICULE AUTOMOBILE DANS UNE VOIE DE CIRCULATION

(30) Priorität: 23.09.2019 DE 102019214480
(43) Veröffentlichungstag der Anmeldung: 03.08.2022
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2020/071126
(87) Internationale Veröffentlichungsnummer: WO 2021/058178

(56) Entgegenhaltungen:
- DE-A1- 102016 212 195
- DE-A1- 102018 003 609
- US-A1- 2017 076 607
- US-B1- 10 089 876
- CESAR BERNARDINI ET AL: "Security and privacy in vehicular communications: Challenges and opportunities", VEHICULAR COMMUNICATIONS, vol. 10, 1 October 2017 (2017-10-01), pages 13 - 28, XP055435906, ISSN: 2214-2096, DOI: 10.1016/j.vehcom.2017.10.002

## Beschreibung

Die Erfindung betrifft ein Verfahren zum zumindest assistierten Einfädeln eines Kraftfahrzeugs in einen Fahrstreifen. Die Erfindung betrifft weiter eine Vorrichtung, ein Computerprogramm und ein maschinenlesbares Speichermedium.

### Stand der Technik

Die Offenlegungsschrift DE 10 2012 218 935 A1 offenbart einen Autobahneinfädelassistenten.

Die Offenlegungsschrift DE 10 2018 003 609 A1 offenbart ein Verfahren zum Unterstützen eines Fahrzeuges.

Die Offenlegungsschrift DE 10 2018 007 298 A1 offenbart ein Verfahren zur Routenplanung.

Die Offenlegungsschrift EP 3 339 124 A1 offenbart ein System zum autonomen Fahren.

Die Patentschrift US 10,089,876 B1 offenbart ein System und ein Verfahren zum Koordinieren eines Spurwechsels.

Die Offenlegungsschrift DE 10 2018 003 609 A1 offenbart ein Verfahren zum Unterstützen eines Fahrzeugs.

Die Offenlegungsschrift DE 10 2016 212 195 A1 offenbart ein Verfahren zum Durchführen eines automatischen Eingriffs in die Fahrzeugführung eines Fahrzeugs.

### Offenbarung der Erfindung

Die der Erfindung zugrunde liegende Aufgabe ist darin zu sehen, ein Konzept zum effizienten zumindest assistierten Einfädeln eines Kraftfahrzeugs in einen Fahrstreifen bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum zumindest assistierten Einfädeln eines Kraftfahrzeugs in einen Fahrstreifen nach Anspruch 1 bereitgestellt.

Nach einem zweiten Aspekt wird eine Vorrichtung bereitgestellt, die eingerichtet ist, alle Schritte des Verfahrens nach dem ersten Aspekt auszuführen.

Nach einem dritten Aspekt wird ein Computerprogramm bereitgestellt, welches Befehle umfasst, die bei Ausführung des Computerprogramms durch einen Computer, beispielsweise durch die Vorrichtung nach dem zweiten Aspekt, diesen veranlassen, ein Verfahren gemäß dem ersten Aspekt auszuführen.

Nach einem vierten Aspekt wird ein maschinenlesbares Speichermedium bereitgestellt, auf dem das Computerprogramm nach dem dritten Aspekt gespeichert ist.

Die Erfindung basiert auf der Erkenntnis und schließt diese mit ein, dass die obige Aufgabe dadurch gelöst werden kann, dass das Kraftfahrzeug bei einem Einfädeln in einen Fahrstreifen derart unterstützt wird, dass die Quer- und/oder Längsführung des Kraftfahrzeugs ferngesteuert werden. Dadurch wird zum Beispiel der technische Vorteil bewirkt, dass das Kraftfahrzeug effizient bei einem Einfädelvorgang in einen Fahrstreifen unterstützt werden kann.

Weiter bewirkt das Erzeugen und Ausgeben der Vorgabesignale bei Detektion eines weiteren Kraftfahrzeugs im Umfeld des Kraftfahrzeugs, dass das assistierte Einfädeln des Kraftfahrzeugs effizient unterstützt werden kann.

Somit wird also insbesondere der technische Vorteil bewirkt, dass ein Konzept zum effizienten zumindest assistierten Einfädeln eines Kraftfahrzeugs in einen Fahrstreifen bereitgestellt ist.

Ein assistiertes Einfädeln umfasst insbesondere den Fall, dass nur die Querführung oder nur die Längsführung des Kraftfahrzeugs ferngesteuert wird. Die Formulierung assistiertes Einfädeln umfasst insbesondere den Fall, dass sowohl die Querführung als auch die Längsführung des Kraftfahrzeugs ferngesteuert werden.

Im Fall, dass Fernsteuersignale zum Steuern der Quer- oder der Längsführung des Kraftfahrzeugs vorgesehen sind, ist gemäß einer Ausführungsform vorgesehen, dass die entsprechende andere Führung, also die Längsführung oder die Querführung, entweder vom Fahrer manuell gesteuert wird oder zumindest teilautomatisiert gesteuert wird, um das Kraftfahrzeug zumindest teilautomatisiert zu führen, um das Kraftfahrzeug assistiert einzufädeln.

Die Formulierung "zumindest teilautomatisiertes Führen" umfasst einen oder mehrere der folgenden Fälle: teilautomatisiertes Führen, hochautomatisiertes Führen, vollautomatisiertes Führen.

Teilautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) und/oder für einen gewissen Zeitraum eine Längs- und eine Querführung des Kraftfahrzeugs automatisch entfernt gesteuert werden. Ein Fahrer des Kraftfahrzeugs muss selbst nicht manuell die Längs -und Querführung des Kraftfahrzeugs steuern. Der Fahrer muss aber das automatische entfernte Steuern der Längs- und Querführung dauerhaft überwachen, um bei Bedarf manuell eingreifen zu können. Der Fahrer muss jederzeit zur vollständigen Übernahme der Kraftfahrzeugführung bereit sein.

Hochautomatisiertes Führen bedeutet, dass für einen gewissen Zeitraum in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch entfernt gesteuert werden. Ein Fahrer des Kraftfahrzeugs muss selbst nicht manuell die Längs -und Querführung des Kraftfahrzeugs steuern. Der Fahrer muss das automatische entfernte Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben, insbesondere mit einer ausreichenden Zeitreserve ausgegeben. Der Fahrer muss also potenziell in der Lage sein, das Steuern der Längs- und Querführung zu übernehmen. Grenzen des automatischen entfernten Steuerns der Quer- und Längsführung werden automatisch erkannt. Bei einem hochautomatisierten Führen ist es nicht möglich, in jeder Ausgangssituation automatisch einen risikominimalen Zustand herbeizuführen.

Voll automatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch entfernt gesteuert werden. Ein Fahrer des Kraftfahrzeugs muss selbst nicht manuell die Längs -und Querführung des Kraftfahrzeugs steuern. Der Fahrer muss das automatische entfernte Steuern der Längs- und Querführung nicht überwachen, um bei Bedarf manuell eingreifen zu können. Vor einem Beenden des automatischen entfernten Steuerns der Quer- und Längsführung erfolgt automatisch eine Aufforderung an den Fahrer zur Übernahme der Fahraufgabe (Steuern der Quer- und Längsführung des Kraftfahrzeugs), insbesondere mit einer ausreichenden Zeitreserve. Sofern der Fahrer nicht die Fahraufgabe übernimmt, wird automatisch in einen risikominimalen Zustand zurückgeführt. Grenzen des automatischen Steuerns der Quer- und Längsführung werden automatisch erkannt. In allen Situationen ist es möglich, automatisch in einen risikominimalen Systemzustand zurückzuführen.

In einer Ausführungsform ist vorgesehen, dass die zumindest eine Vorgabe eine Fahrvorgabe umfasst, welche das weitere Kraftfahrzeug abfahren soll.

Dadurch wird zum Beispiel der technische Vorteil bewirkt, dass das assistierte Einfädeln effizient unterstützt werden kann.

Nach einer Ausführungsform richtet sich die Fahrvorgabe an einen Fahrer des weiteren Kraftfahrzeugs. Sollte es sich zum Beispiel bei dem weiteren Kraftfahrzeug um ein Kraftfahrzeug handeln, welches nicht ferngesteuert werden kann, so kann die Fahrvorgabe dennoch umgesetzt werden. In diesem Fall mittels des Fahrers, also eine manuelle Umsetzung.

Gemäß einer Ausführungsform richtet sich die Fahrvorgabe an das weitere Kraftfahrzeug selbst. Das heißt also, dass die Fahrvorgabe mittels des weiteren Kraftfahrzeugs selbstständig, also insbesondere autonom, umgesetzt bzw. abgefahren werden soll.

In einer Ausführungsform ist vorgesehen, dass die Fahrvorgabe Fernsteuerungsbefehle zum Fernsteuern einer Quer- und/oder Längsführung des weiteren Kraftfahrzeugs umfasst.

Dadurch wird zum Beispiel der technische Vorteil bewirkt, dass die Fahrvorgabe effizient umgesetzt werden kann. Das heißt also insbesondere, dass gemäß dieser Ausführungsform vorgesehen ist, dass das weitere Kraftfahrzeug ferngesteuert wird basierend auf der Fahrvorgabe. Das Fernsteuern wird insbesondere basierend auf den Fernsteuerungsbefehlen durchgeführt.

Ausführungen, die im Zusammenhang mit einem Fernsteuern des weiteren Kraftfahrzeugs gemacht sind, gelten analog für Ausführungen, die im Zusammenhang mit dem Fernsteuern des Kraftfahrzeugs gemacht sind, und umgekehrt.

Weiter kann dadurch der technische Vorteil bewirkt werden, dass von einer teuren Infrastrukturmaßnahme, zum Beispiel einem Steuern eines Verkehrsleitsystems, abgesehen werden kann.

In einer Ausführungsform ist vorgesehen, dass die Fahrvorgabe ein Abbremsen oder ein Beschleunigen oder einen Fahrstreifenwechsel umfasst.

Dadurch wird zum Beispiel der technische Vorteil bewirkt, dass das einzufädelnde Kraftfahrzeug effizient vor dem weiteren Kraftfahrzeug, wenn die Fahrvorgabe ein Abbremsen umfasst, oder hinter dem weiteren Kraftfahrzeug einfädeln kann, wenn die Fahrvorgabe ein Beschleunigen umfasst. Wenn die Fahrvorgabe einen Spurwechsel umfasst, so kann das einzufädelnde Kraftfahrzeug in vorteilhafter Weise effizient in den dadurch entstandenen Freiraum auf dem Fahrstreifen einfädeln kann.

In einer Ausführungsform ist vorgesehen, dass bei Detektion von zwei sich auf dem Fahrstreifen befindenden und hintereinander fahrenden weiteren Kraftfahrzeugen die jeweilige Fahrvorgabe für die zwei weiteren Kraftfahrzeuge derart ist, dass durch das Abfahren der jeweiligen Fahrvorgabe mittels des jeweiligen weiteren Kraftfahrzeugs zwischen den zwei weiteren Kraftfahrzeugen eine Lücke gebildet wird, in welche das einzufädelnde Kraftfahrzeug einfädeln kann, wobei die Fernsteuersignale derart sind, dass bei einem Fernsteuern der Quer- und/oder Längsführung des Kraftfahrzeugs basierend auf den Fernsteuersignalen das Kraftfahrzeug in die Lücke fährt.

Dadurch wird zum Beispiel der technische Vorteil bewirkt, dass das Kraftfahrzeug effizient eingefädelt werden kann.

Die Lücke zwischen den zwei weiteren Kraftfahrzeugen entspricht also einem Abstand zwischen den zwei weiteren Kraftfahrzeugen.

Die Lücke bzw. der Abstand wird zum Beispiel basierend auf zumindest einem Kraftfahrzeugparameter ermittelt bzw. bestimmt. Bei diesem zumindest einen Kraftfahrzeugparameter kann es sich beispielsweise um einen der nachfolgend beschriebenen Kraftfahrzeugparameter handeln.

Das heißt also insbesondere, dass die Lücke gemäß einer Ausführungsform von einer Länge und/oder Breite und/oder Höhe und/oder maximal mögliche Kraftfahrzeuggeschwindigkeit und/oder maximal mögliche Kraftfahrzeugbeschleunigung des einzufädelnden Kraftfahrzeugs respektive der weiteren Kraftfahrzeuge abhängt.

In einer Ausführungsform ist vorgesehen, dass bei Detektion von zwei sich auf dem Fahrstreifen befindenden und hintereinander fahrenden weiteren Kraftfahrzeugen die jeweilige Fahrvorgabe für die zwei weiteren Kraftfahrzeuge ein Abbremsen oder ein Beschleunigen oder einen Fahrstreifenwechsel umfasst. Die jeweilige Fahrvorgabe ist vorzugsweise identisch. Das heißt also zum Beispiel, dass beide Kraftfahrzeuge abbremsen oder beschleunigen sollen oder einen Fahrstreifenwechsel durchführen sollen. Das einzufädelnde Kraftfahrzeug kann sich somit entsprechend vor oder hinter den beiden Kraftfahrzeugen effizient einfädeln oder in den durch die Fahrstreifenwechseln entstandenen Freiraum zum Einfädeln nutzen.

In einer Ausführungsform ist vorgesehen, dass bei Detektion von mehreren weiteren Kraftfahrzeugen, insbesondere von mehr als zwei weiteren Kraftfahrzeugen, die jeweilige Fahrvorgabe für die weiteren Kraftfahrzeuge derart ist, dass das einzufädelnde Kraftfahrzeug sicher einfädeln kann. Sicher bedeutet insbesondere unfallfrei respektive kollisionsfrei. Sicher bedeutet insbesondere, dass das einzufädelnde Kraftfahrzeug beim und/oder nach dem Einfädeln einen vorbestimmten Sicherheitsabstand zu einem vorausfahrenden und/oder hinterherfahrenden weiteren Kraftfahrzeug aufweist.

Die jeweiligen Fahrvorgaben sind zum Beispiel zumindest teilweise, insbesondere alle, identisch oder sind zum Beispiel zumindest teilweise, insbesondere alle, unterschiedlich.

In einer Ausführungsform ist vorgesehen, dass basierend auf den Umgebungssignalen und basierend auf den Fernsteuersignalen Steuersignale zum Steuern eines Verkehrsleitsystems erzeugt und ausgegeben werden, um einen Verkehr im Umfeld des Kraftfahrzeugs mittels des Verkehrsleitsystems zu leiten, um das assistierte Einfädeln des Kraftfahrzeugs zu unterstützen.

Dadurch wird zum Beispiel der technische Vorteil bewirkt, dass das assistierte Einfädeln des Kraftfahrzeugs effizient unterstützt werden kann.

Ein Verkehrsleitsystem bezeichnet insbesondere ein System zur Lenkung eines Straßenverkehrs insbesondere mittels statischen Verkehrszeichen und/oder Wechselverkehrszeichen.

Ein Wechselverkehrszeichen bezeichnet ein Verkehrszeichen, das im Bedarfsfall gezeigt, geändert oder aufgehoben werden kann. Es handelt sich also hier um ein dynamisches Verkehrszeichen. Zum Beispiel umfasst ein Wechselverkehrszeichen ein elektronisches Schild oder eine Anzeigeeinrichtung.

Ein Verkehrsleitsystem umfasst also insbesondere ein oder mehrere Wechselverkehrszeichen und/oder ein oder mehrere Lichtsignalanlagen.

In einer Ausführungsform ist vorgesehen, dass Sicherheitsbedingungssignale empfangen werden, welche zumindest eine Sicherheitsbedingung repräsentieren, welche erfüllt sein muss, damit das Kraftfahrzeug ferngesteuert werden darf und/oder ob einem sich in der Umgebung des Kraftfahrzeugs befindenden weiteren Kraftfahrzeug eine Vorgabe vorgegeben werden darf, wobei geprüft wird, ob die zumindest eine Sicherheitsbedingung erfüllt ist, wobei die Fernsteuersignale und/oder die Vorgabesignale basierend auf einem Ergebnis des Prüfens, ob die zumindest eine Sicherheitsbedingung erfüllt ist, erzeugt werden.

Dadurch wird zum Beispiel der technische Vorteil bewirkt, dass die Fernsteuersignale effizient erzeugt werden können. Insbesondere wird dadurch der technische Vorteil bewirkt, dass effizient sichergestellt werden kann, dass bestimmte Voraussetzungen, vorliegend die Sicherheitsbedingung, für ein Fernsteuern des Kraftfahrzeugs erfüllt sind. Somit wird also insbesondere der technische Vorteil bewirkt, dass, wenn die Sicherheitsbedingung erfüllt ist, dann das Fernsteuern des Kraftfahrzeugs sicher möglich ist.

Dadurch wird weiter zum Beispiel der technische Vorteil bewirkt, dass die Vorgabesignale effizient erzeugt werden können. Insbesondere wird dadurch der technische Vorteil bewirkt, dass effizient sichergestellt werden kann, dass bestimmte Voraussetzungen, vorliegend die Sicherheitsbedingung, für ein Vorgeben einer Vorgabe für das weitere Kraftfahrzeug erfüllt sind. Somit wird also insbesondere der technische Vorteil bewirkt, dass, wenn die Sicherheitsbedingung erfüllt ist, dann ein Vorgeben einer Vorgabe für das weitere Kraftfahrzeug sicher möglich ist.

Wenn zum Beispiel die Vorgabe eine Fahrvorgabe umfassend Fernsteuerungsbefehle aufweist, so wird in diesem Fall insbesondere der technische Vorteil bewirkt, dass, wenn die Sicherheitsbedingung erfüllt ist, dann ein Fernsteuern des weiteren Kraftfahrzeugs basierend auf den Fernsteuerungsbefehlen sicher möglich ist.

Gemäß einer Ausführungsform ist vorgesehen, dass hinsichtlich des Erzeugens der Fernsteuersignale und des Erzeugens der Vorgabesignale unterschiedliche Sicherheitsbedingungen dahingehend überprüft werden, ob diese erfüllt sind.

Das heißt also zum Beispiel, dass geprüft wird, ob eine erste Sicherheitsbedingung erfüllt ist, wobei die Fernsteuersignale basierend auf einem Ergebnis des Prüfens, ob die erste Sicherheitsbedingung erfüllt ist, erzeugt werden, wobei geprüft wird, ob eine zweite Sicherheitsbedingung erfüllt ist, wobei die Vorgabesignale basierend auf einem Ergebnis des Prüfens, ob die zweite Sicherheitsbedingung erfüllt ist, erzeugt werden, wobei die erste Sicherheitsbedingung und die zweite Sicherheitsbedingung unterschiedlich sind.

Nach einer Ausführungsform ist vorgesehen, dass die zumindest eine Sicherheitsbedingung jeweils ein Element ausgewählt aus der folgenden Gruppen von Sicherheitsbedingungen ist: Vorliegen eines vorbestimmten Sicherheitsintegritätsniveaus (auf Englisch: "Safety Integrity Level" SIL bzw. "Automotive Safety Integrity Level" ASIL) von zumindest dem Kraftfahrzeug und einer Infrastruktur, insbesondere einschließlich einer Kommunikationsstrecke und/oder Kommunikationskomponenten (zum Beispiel Kommunikationsschnittstelle), zum Fernsteuern eines Kraftfahrzeugs (insbesondere bzgl. dem Gesamtsystemen im Kraftfahrzeug und Infrastruktur sowie insbesondere Teilen; z.B. Komponenten, Algorithmen, Schnittstellen, usw., Vorliegen einer maximalen Latenzzeit einer Kommunikation zwischen dem Kraftfahrzeug und einer Fernsteuerungseinrichtung zum Fernsteuern des Kraftfahrzeugs basierend auf den Fernsteuersignalen, Vorliegen eines vorbestimmten Computerschutzniveaus einer Vorrichtung zum Ausführen der Schritte des Verfahrens nach dem ersten Aspekt, Vorliegen von vorbestimmten Komponenten und/Algorithmen und/oder Kommunikationsmöglichkeiten, welche zur Ausführung der Schritte des Verfahrens nach dem ersten Aspekt verwendet werden, Vorliegen einer Redundanz und/oder Diversität bei vorbestimmten Komponenten und/oder Algorithmen und/oder Kommunikationsmöglichkeiten, welche zur Ausführung der Schritte des Verfahrens nach dem ersten Aspekt verwendet werden, Vorliegen von vorbestimmten Verfügbarkeitsangaben, welche eine Verfügbarkeit von vorbestimmten Komponenten und/Algorithmen und/oder Kommunikationsmöglichkeiten angeben, Vorliegen von vorbestimmten Qualitätskriterien der vorbestimmten Komponenten und/Algorithmen und/oder Kommunikationsmöglichkeiten, Vorliegen eines Plans, welcher Maßnahmen zur Reduktion von Fehlern und/oder Maßnahmen bei Ausfällen von vorbestimmten Komponenten und/Algorithmen und/oder Kommunikationsmöglichkeiten und/oder Maßnahmen zur Fehlanalysen und/oder Maßnahmen bei Fehlinterpretationen umfasst, Vorliegen eines oder mehrerer Fallback-Szenarien, Vorliegen einer vorbestimmten Funktion, Vorliegen einer vorbestimmten Verkehrssituation, Vorliegen eines vorbestimmten Wetters, maximal mögliche Zeit für eine jeweilige Durchführung respektive Ausführung eines Schrittes oder mehrerer Schritte des Verfahrens nach dem ersten Aspekt, Vorliegen eines Prüfergebnisses, dass Elemente respektive Funktionen, welche zur Ausführung des Verfahrens nach dem ersten Aspekt verwendet werden, momentan fehlerfrei funktionieren.

Eine Kommunikationsstrecke ist zum Beispiel eine Kommunikationsstrecke zwischen der Vorrichtung nach dem zweiten Aspekt und dem Kraftfahrzeug. Eine Kommunikationsstrecke umfasst zum Beispiel einen oder mehrere Kommunikationskanäle.

In einer Ausführungsform ist eine Komponente, welche zur Ausführung des Verfahrens nach dem ersten Aspekt verwendet wird, ein Element ausgewählt aus der folgenden Gruppe von Komponenten: Umfeldsensor, Kraftfahrzeug, Infrastruktur, Fernsteuerungseinrichtung, Vorrichtung nach dem zweiten Aspekt, Kraftfahrzeugsystem, insbesondere Antriebssystem, Kupplungssystem, Bremssystem, Fahrerassistenzsystem, Kommunikationsschnittstelle des Kraftfahrzeugs respektive der Infrastruktur, Prozessor, Eingang, Ausgang der Vorrichtung nach dem zweiten Aspekt.

In einer Ausführungsform ist eine Funktion, welche zur Ausführung des Verfahrens nach dem ersten Aspekt verwendet wird, ein Element ausgewählt aus der folgenden Gruppe von Funktionen: Fernsteuerungsfunktion, Kommunikationsfunktion zwischen dem Kraftfahrzeug und der Infrastruktur respektive der Fernsteuerungseinrichtung, Auswertefunktion von Umfeldsensordaten eines Umfeldsensors, Planungsfunktion, insbesondere Fahrplanungsfunktion, Verkehrsanalysefunktion.

Ein Computerschutzniveau definiert insbesondere folgendes: aktivierte Firewall und/oder gültiges Verschlüsselungszertifikat zur Verschlüsselung einer Kommunikation zwischen dem Kraftfahrzeug und der Infrastruktur respektive der Fernsteuerungseinrichtung und/oder aktiviertes Virenprogramm mit aktuellen Virensignaturen und/oder Vorliegen eines Schutzes, insbesondere eines mechanischen Schutzes, insbesondere eines Einbruchsschutzes, des Computers, insbesondere der Vorrichtung nach dem zweiten Aspekt, respektive der Fernsteuerungseinrichtung und/oder Vorliegen einer Prüfungsmöglichkeit, dass Signale, insbesondere Fernsteuersignale respektive Umgebungssignale, korrekt, also fehlerfrei, übertragen wurden.

Ein Algorithmus umfasst zum Beispiel das Computerprogramm nach dem dritten Aspekt.

Dadurch, dass insbesondere geprüft wird, dass eine Redundanz und/oder Diversität bei vorbestimmten Komponenten und/oder Algorithmen und/oder Kommunikationsmöglichkeiten vorliegt, wird zum Beispiel der technische Vorteil bewirkt, dass bei Ausfall der entsprechenden Komponente, zum Beispiel eines Rechners, respektive des entsprechenden Algorithmus respektive der entsprechenden Kommunikationsmöglichkeit trotzdem eine sichere Funktion ausgeführt werden kann.

Um sicherzustellen, dass Ergebnisse korrekt sind, können diese nach einer Ausführungsform zum Beispiel mehrmals berechnet werden, entsprechende Ergebnisse miteinander verglichen werden können. Nur bei Übereinstimmung des Ergebnisses wird zum Beispiel bestimmt, dass die Ergebnisse korrekt sind. Wenn mehrmals eine ungerade Zahl ist, so kann zum Beispiel vorgesehen sein, dass bestimmt wird, dass das Ergebnis entsprechend der höchsten Anzahl an gleichen Ergebnissen korrekt ist.

Nur, wenn bestimmt werden kann, dass das Ergebnis korrekt ist, werden zum Beispiel Fernsteuersignale respektive Vorgabesignale erzeugt.

In einer Ausführungsform ist vorgesehen, dass die Fernsteuersignale respektive Vorgabesignale nur dann erzeugt werden, wenn die zumindest eine Sicherheitsbedingung erfüllt ist.

In einer Ausführungsform ist vorgesehen, dass das Prüfen, ob die zumindest eine Sicherheitsbedingung erfüllt ist, vor und/oder nach und/oder während eines oder mehrerer vorbestimmter Verfahrensschritte durchgeführt wird.

Insbesondere wird dadurch der technische Vorteil bewirkt, dass effizient sichergestellt werden kann, dass bestimmte Voraussetzungen, vorliegend die Sicherheitsbedingung, für ein Fernsteuern des Kraftfahrzeugs respektive für ein Vorgeben einer Vorgabe vor und/oder nach und/oder während des Durchführens der entsprechenden Verfahrensschritte erfüllt sind. Somit wird also insbesondere der technische Vorteil bewirkt, dass, wenn die Sicherheitsbedingung erfüllt ist, dann das Fernsteuern des Kraftfahrzeugs respektive das Vorgeben einer Vorgabe sicher möglich ist.

In einer Ausführungsform ist vorgesehen, dass nach Ausgeben der Fernsteuersignale ein Fernsteuern des Kraftfahrzeugs basierend auf den ausgegebenen Fernsteuersignalen überprüft wird, um einen Fehler zu detektieren, wobei bei Detektion eines Fehlers das Fernsteuern abgebrochen wird oder Notfallfernsteuersignale zum Fernsteuern der Quer- und/oder Längsführung des Kraftfahrzeugs in einem Notfall erzeugt und ausgegeben werden.

Die Notfallfernsteuersignale sind zum Beispiel derart, dass bei einem Fernsteuern der Quer- und/oder Längsführung des Kraftfahrzeugs basierend auf den Notfallfernsteuersignalen das Kraftfahrzeug in einen sicheren Zustand überführt wird, insbesondere angehalten wird.

In einer Ausführungsform ist vorgesehen, dass nach Ausgeben der Fernsteuersignale ein Fernsteuern des Kraftfahrzeugs basierend auf den ausgegebenen Fernsteuersignalen überprüft wird, um einen Fehler zu detektieren, wobei bei Detektion eines Fehlers das Fernsteuern abgebrochen wird oder kraftfahrzeuginterne Notfallsteuersignale zum Steuern der Quer- und/oder Längsführung des Kraftfahrzeugs in einem Notfall erzeugt und ausgegeben werden.

Die kraftfahrzeuginternen Notfallsteuersignale sind zum Beispiel derart, dass bei einem Steuern der Quer- und/oder Längsführung des Kraftfahrzeugs basierend auf den kraftfahrzeuginternen Notfallsteuersignalen das Kraftfahrzeug in einen sicheren Zustand überführt wird, insbesondere angehalten wird.

Kraftfahrzeuginterne Notfallsteuersignale sind also Notfallsteuersignale, welche das Kraftfahrzeug selbst erzeugt bzw. im Kraftfahrzeug erzeugt werden.

Dadurch wird zum Beispiel der technische Vorteil bewirkt, dass auch bei einem Ausfall einer Kommunikation, was zum Beispiel einem Notfall entspricht, zwischen dem Kraftfahrzeug und der Vorrichtung nach dem zweiten Aspekt bzw. einer Fernsteuerungseinrichtung zum Fernsteuern von Kraftfahrzeugen das Kraftfahrzeug sich selbst in einen sicheren Zustand überführen kann.

Ausführungen, die im Zusammenhang mit den Fernsteuersignalen bzw. den kraftfahrzeuginternen Notfallsteuersignalen gemacht sind, gelten analog für die Notfallfernsteuersignale und umgekehrt.

In einer Ausführungsform ist vorgesehen, dass nach Ausgeben der Vorgabesignale, wobei die zumindest eine Vorgabe eine Fahrvorgabe umfasst, welche das weitere Kraftfahrzeug abfahren soll, wobei die Fahrvorgabe Fernsteuerungsbefehle zum Fernsteuern einer Quer- und/oder Längsführung des weiteren Kraftfahrzeugs umfasst, ein Fernsteuern des weiteren Kraftfahrzeugs basierend auf den Fernsteuerungsbefehlen überprüft wird, um einen Fehler zu detektieren, wobei bei Detektion eines Fehlers das Fernsteuern abgebrochen wird oder weitere Notfallfernsteuersignale zum Fernsteuern der Quer- und/oder Längsführung des weiteren Kraftfahrzeugs in einem Notfall erzeugt und ausgegeben werden.

Die weiteren Notfallfernsteuersignale sind zum Beispiel derart, dass bei einem Fernsteuern der Quer- und/oder Längsführung des weiteren Kraftfahrzeugs basierend auf den weiteren Notfallfernsteuersignalen das weitere Kraftfahrzeug in einen sicheren Zustand überführt wird, insbesondere angehalten wird.

In einer Ausführungsform ist vorgesehen, dass nach Ausgeben der Vorgabesignale, wobei die zumindest eine Vorgabe eine Fahrvorgabe umfasst, welche das weitere Kraftfahrzeug abfahren soll, wobei die Fahrvorgabe Fernsteuerungsbefehle zum Fernsteuern einer Quer- und/oder Längsführung des weiteren Kraftfahrzeugs umfasst, ein Fernsteuern des weiteren Kraftfahrzeugs basierend auf den Fernsteuerungsbefehlen überprüft wird, um einen Fehler zu detektieren, wobei bei Detektion eines Fehlers das Fernsteuern abgebrochen wird oder kraftfahrzeuginterne weitere Notfallsteuersignale zum Steuern der Quer- und/oder Längsführung des weiteren Kraftfahrzeugs in einem Notfall erzeugt und ausgegeben werden.

Die kraftfahrzeuginternen weiteren Notfallsteuersignale sind zum Beispiel derart, dass bei einem Steuern der Quer- und/oder Längsführung des weiteren Kraftfahrzeugs basierend auf den kraftfahrzeuginternen weiteren Notfallsteuersignalen das weitere Kraftfahrzeug in einen sicheren Zustand überführt wird, insbesondere angehalten wird.

Weitere kraftfahrzeuginterne Notfallsteuersignale sind also Notfallsteuersignale, welche das weitere Kraftfahrzeug selbst erzeugt bzw. im weiteren Kraftfahrzeug erzeugt werden.

Dadurch wird zum Beispiel der technische Vorteil bewirkt, dass auch bei einem Ausfall einer Kommunikation, was zum Beispiel einem Notfall entspricht, zwischen dem weiteren Kraftfahrzeug und der Vorrichtung nach dem zweiten Aspekt bzw. einer Fernsteuerungseinrichtung zum Fernsteuern von Kraftfahrzeugen das weitere Kraftfahrzeug sich selbst in einen sicheren Zustand überführen kann.

Ausführungen, die im Zusammenhang mit den Fernsteuerbefehlen bzw. den kraftfahrzeuginternen weiteren Notfallsteuersignalen gemacht sind, gelten analog für die weiteren Notfallfernsteuersignale und umgekehrt.

Nach einer Ausführungsform ist vorgesehen, dass Einfädelungsanforderungssignale empfangen werden, welche eine Anforderung nach einem zumindest assistierten Einfädeln eines Kraftfahrzeugs in den Fahrstreifen repräsentieren, wobei basierend auf der Anforderung bestimmt wird, dass ein Kraftfahrzeug in den Fahrstreifen eingefädelt werden soll.

Dadurch wird zum Beispiel der technische Vorteil bewirkt, dass das Verfahren effizient initiiert werden kann. Insbesondere wird dadurch der technische Vorteil bewirkt, dass effizient bestimmt werden kann, dass ein Kraftfahrzeug in den Fahrstreifen eingefädelt werden soll.

Gemäß einer Ausführungsform ist vorgesehen, dass Fahrstreifenumgebungssignale empfangen werden, welche eine Fahrstreifenumgebung des Fahrstreifens repräsentieren, wobei die Fahrstreifenumgebungssignale verarbeitet werden, um ein in den Fahrstreifen einzufädelndes Kraftfahrzeug zu detektieren, wobei basierend auf dem Verarbeiten der Fahrstreifenumgebungssignale bestimmt wird, dass ein Kraftfahrzeug in den Fahrstreifen eingefädelt werden soll.

Dadurch wird zum Beispiel der technische Vorteil bewirkt, dass effizient bestimmt werden kann, dass ein Kraftfahrzeug in den Fahrstreifen eingefädelt werden soll. Insbesondere wird dadurch der technische Vorteil bewirkt, dass ein einzufädelndes Kraftfahrzeug effizient detektiert werden kann.

Gemäß einer Ausführungsform ist vorgesehen, dass zumindest ein Kraftfahrzeugparameter des Kraftfahrzeugs respektive des weiteren Kraftfahrzeugs empfangen wird, wobei die Fernsteuersignale respektive die Vorgabesignale basierend auf dem zumindest einen Kraftfahrzeugparameter erzeugt werden.

Dadurch wird zum Beispiel der technische Vorteil bewirkt, dass die Fernsteuersignale respektive die Vorgabesignale effizient erzeugt werden können. Insbesondere können dadurch die Fernsteuersignale respektive die Vorgabesignale effizient für das konkrete Kraftfahrzeug erzeugt werden. So können zum Beispiel eine maximal mögliche Kraftfahrzeuggeschwindigkeit, eine maximal mögliche Kraftfahrzeugbeschleunigung, eine momentane Kraftfahrzeugzuladung und/oder ein momentanes Kraftfahrzeuggewicht effizient berücksichtigt werden.

Gemäß einer Ausführungsform ist vorgesehen, dass bei einem Fehlen eines Empfangens von zumindest einem Kraftfahrzeugparameter die Fernsteuersignale respektive die Vorgabesignale basierend auf einem dem zumindest einen Kraftfahrzeugparameter entsprechenden Kraftfahrzeugstandardparameter erzeugt werden.

Dadurch wird zum Beispiel der technische Vorteil bewirkt, dass auf fehlende Kraftfahrzeugparameter effizient reagiert werden kann.

Gemäß einer Ausführungsform ist vorgesehen, dass der zumindest eine Kraftfahrzeugparameter jeweils ein Element ausgewählt aus der folgenden Gruppe von Kraftfahrzeugparameter ist: maximal mögliche Kraftfahrzeuggeschwindigkeit, maximal mögliche Kraftfahrzeugbeschleunigung, momentane Kraftfahrzeugzuladung, momentanes Kraftfahrzeuggewicht, Länge, Breite und Höhe.

Dadurch wird zum Beispiel der technische Vorteil bewirkt, dass besonders geeignete Kraftfahrzeugparameter verwendet werden können.

Nach einer Ausführungsform ist vorgesehen, dass ein oder mehrere Verfahrensschritte bis auf die Schritte des Erzeugens und Ausgebens der Fernsteuersignale kraftfahrzeugintern und/oder wobei ein oder mehrere Verfahrensschritte kraftfahrzeugextern, insbesondere in einer Infrastruktur, vorzugsweise in einer Cloud-Infrastruktur, ausgeführt werden.

Dadurch wird zum Beispiel der technische Vorteil bewirkt, dass die entsprechenden Verfahrensschritte effizient redundant durchgeführt werden können. Dies kann insbesondere in vorteilhafter Weise eine Sicherheit weiter steigern.

Nach einer Ausführungsform ist vorgesehen, dass ein oder mehrere Verfahrensschritte dokumentiert, insbesondere in einer Blockchain dokumentiert, werden.

Dadurch wird zum Beispiel der technische Vorteil bewirkt, dass auch nach Durch- oder Ausführung des Verfahrens dieses nachträglich analysiert werden kann aufgrund der Dokumentation. Das Dokumentieren in einer Blockchain weist insbesondere den technischen Vorteil auf, dass die Dokumentation manipulations- und fälschungssicher ist.

Eine Blockchain (auch Block Chain, englisch für Blockkette) ist insbesondere eine kontinuierlich erweiterbare Liste von Datensätzen, "Blöcke" genannt, die mittels eines oder mehrerer kryptographischer Verfahren miteinander verkettet sind. Jeder Block enthält dabei insbesondere einen kryptographisch sicheren Hash (Streuwert) des vorhergehenden Blocks, insbesondere einen Zeitstempel und insbesondere Transaktionsdaten.

In einer Ausführungsform ist vorgesehen, dass die erzeugten Fernsteuersignale derart sind, dass bei einem Fernsteuern der Quer- und/oder Längsführung des Kraftfahrzeugs basierend auf den Fernsteuersignalen das Kraftfahrzeug in eine Lücke zwischen zwei sich auf dem Fahrstreifen befindenden und hintereinander fahrenden weiteren Kraftfahrzeugen eingefädelt wird.

Nach einer Ausführungsform ist vorgesehen, dass das Verfahren nach dem ersten Aspekt ein computerimplementiertes Verfahren ist.

Nach einer Ausführungsform ist vorgesehen, dass das Verfahren gemäß dem ersten Aspekt mittels der Vorrichtung nach dem zweiten Aspekt aus- oder durchgeführt wird.

Vorrichtungsmerkmale ergeben sich analog aus entsprechenden Verfahrensmerkmalen und umgekehrt. Das heißt also insbesondere, dass sich technische Funktionen der Vorrichtung nach dem zweiten Aspekt analog aus entsprechenden technischen Funktionalitäten des Verfahrens nach dem ersten Aspekt und umgekehrt ergeben.

Die Formulierung "zumindest ein(e)" steht insbesondere für "ein(e) oder mehrere".

Die Abkürzung "bzw." steht für "beziehungsweise", was insbesondere für "respektive" steht.

Die Formulierung "respektive" steht insbesondere für "und/oder".

Die Begriffe Fahrspur und Fahrstreifen können synonym verwendet werden.

Ausführungsbeispiele der Erfindung sind in den Zeichnungen dargestellt und in der nachfolgenden Beschreibung näher erläutert. Es zeigen:
Fig. 1 ein Ablaufdiagramm eines Verfahrens zum zumindest assistierten Einfädeln eines Kraftfahrzeugs in einen Fahrstreifen,
Fig. 2 eine Vorrichtung,
Fig. 3 ein maschinenlesbares Speichermedium,
Fig. 4 eine erste Autobahnauffahrt,
Fig. 5 eine zweite Autobahnauffahrt und
Fig. 6 eine dritte Autobahnauffahrt.

Im Folgenden können für gleiche Merkmale gleiche Bezugszeichen verwendet werden.

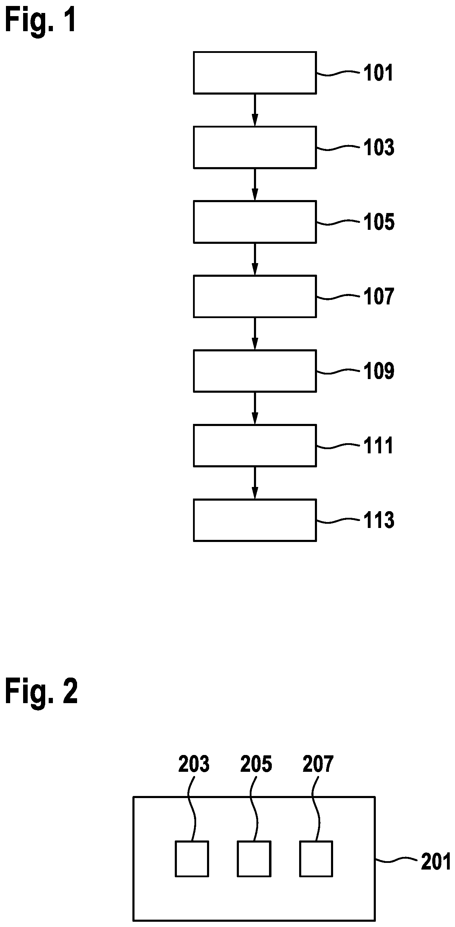

Fig. 1 zeigt ein Ablaufdiagramm eines Verfahrens zum zumindest assistierten Einfädeln eines Kraftfahrzeugs in einen Fahrstreifen.

Das Verfahren umfasst die folgenden Schritte:
Bestimmen 101, dass ein Kraftfahrzeug in den Fahrstreifen eingefädelt werden soll,
Empfangen 103 von Umgebungssignalen, welche eine den Fahrstreifen zumindest teilweise umfassende Umgebung des Kraftfahrzeugs repräsentieren, Erzeugen 105 von Fernsteuersignalen zum Fernsteuern einer Quer- und/oder Längsführung des Kraftfahrzeugs basierend auf den Umgebungssignalen, um bei einem Fernsteuern basierend auf den Fernsteuersignalen das Kraftfahrzeug in den Fahrstreifen zumindest assistiert einzufädeln,
Ausgeben 107 der erzeugten Fernsteuersignale,
wobei die Umgebungssignale verarbeitet 109 werden, um ein sich in der Umgebung des Kraftfahrzeugs befindendes weiteres Kraftfahrzeug zu detektieren,
wobei bei Detektion eines sich in der Umgebung des Kraftfahrzeugs befindenden weiteren Kraftfahrzeugs Vorgabesignale erzeugt 111 werden, welche zumindest eine Vorgabe für das weitere Kraftfahrzeug repräsentieren, um das assistierte Einfädeln des Kraftfahrzeugs zu unterstützen,
wobei die erzeugten Vorgabesignale ausgegeben 113 werden.

Nach einer Ausführungsform ist vorgesehen, dass Sicherheitsbedingungssignale empfangen werden, welche zumindest eine Sicherheitsbedingung repräsentieren, welche erfüllt sein muss, damit das Kraftfahrzeug ferngesteuert werden darf und/oder ob einem sich in der Umgebung des Kraftfahrzeugs befindenden weiteren Kraftfahrzeug eine Vorgabe vorgegeben werden darf, wobei geprüft wird, ob die zumindest eine Sicherheitsbedingung erfüllt ist, wobei die Fernsteuersignale und/oder die Vorgabesignale basierend auf einem Ergebnis des Prüfens, ob die zumindest eine Sicherheitsbedingung erfüllt ist, erzeugt werden.

Gemäß einer Ausführungsform ist vorgesehen, dass ein Ergebnis des Prüfens, ob die zumindest eine Sicherheitsbedingung erfüllt ist, angibt, dass die zumindest eine Sicherheitsbedingung erfüllt ist oder nicht.

Nach einer Ausführungsform ist vorgesehen, dass die Fernsteuersignale respektive die Vorgabesignale nur dann erzeugt und ausgegeben werden, wenn das Ergebnis des Prüfens angibt, dass die zumindest eine Sicherheitsbedingung erfüllt ist.

Nach einer Ausführungsform ist vorgesehen, dass von einem Erzeugen und Ausgeben von Fernsteuersignalen respektive Vorgabesignalen abgesehen wird, wenn das Ergebnis des Prüfens angibt, dass die zumindest eine Sicherheitsbedingung nicht erfüllt ist.

Nach einer Ausführungsform ist vorgesehen, dass das Verfahren nach dem ersten Aspekt ein Fernsteuern des Kraftfahrzeugs basierend auf den erzeugten Fernsteuersignalen umfasst.

Nach einer Ausführungsform ist vorgesehen, dass das Verfahren nach dem ersten Aspekt bei Detektion eines weiteren Kraftfahrzeugs ein Fernsteuern des weiteren Kraftfahrzeugs basierend auf den Fernsteuerbefehlen umfasst.

Fig. 2 zeigt eine Vorrichtung 201.

Die Vorrichtung 201 ist eingerichtet, alle Schritte des Verfahrens nach dem ersten Aspekt auszuführen.

Die Vorrichtung 201 umfasst einen Eingang 203, welcher eingerichtet ist, die Umgebungssignale zu empfangen.

Die Vorrichtung 201 umfasst weiter einen Prozessor 205, welcher eingerichtet ist, den Schritt des Bestimmens auszuführen. Zum Beispiel ist der Prozessor 205 eingerichtet, basierend auf den Umgebungssignalen zu bestimmen, dass ein Kraftfahrzeug in den Fahrstreifen eingefädelt werden soll.

Der Prozessor 205 ist weiter eingerichtet, die Fernsteuersignale zu erzeugen.

Die Vorrichtung 201 umfasst weiter einen Ausgang 207, welcher eingerichtet ist, die erzeugten Fernsteuersignale auszugeben.

Zum Beispiel umfasst gemäß einer Ausführungsform das Ausgeben der erzeugten Fernsteuersignale ein Senden der Fernsteuersignale über ein Kommunikationsnetzwerk, insbesondere über ein drahtloses Kommunikationsnetzwerk, an das Kraftfahrzeug.

Der Prozessor 205 ist weiter eingerichtet, die Umgebungssignale zu verarbeiten, um ein sich in der Umgebung des Kraftfahrzeugs befindendes weiteres Kraftfahrzeug zu detektieren. Der Prozessor 205 ist weiter eingerichtet, bei Detektion eines sich in der Umgebung des Kraftfahrzeugs befindenden weiteren Kraftfahrzeugs Vorgabesignale zu erzeugen, welche zumindest eine Vorgabe für das weitere Kraftfahrzeug repräsentieren, um das assistierte Einfädeln des Kraftfahrzeugs zu unterstützen.

Der Ausgang 207 ist weiter eingerichtet, die erzeugten Vorgabesignale auszugeben.

Zum Beispiel umfasst gemäß einer Ausführungsform das Ausgeben der erzeugten Vorgabesignale ein Senden der Vorgabesignale über ein Kommunikationsnetzwerk, insbesondere über ein drahtloses Kommunikationsnetzwerk, an das weitere Kraftfahrzeug.

Allgemein werden Signale, welche empfangen werden, mittels des Eingangs 203 empfangen. Der Eingang 203 ist also insbesondere eingerichtet, die entsprechenden Signale zu empfangen.

Allgemein werden Signale, welche ausgegeben werden, mittels des Ausgangs 207 ausgegeben. Der Ausgang 207 ist also insbesondere eingerichtet, die entsprechenden Signale auszugeben.

Nach einer Ausführungsform sind anstelle des einen Prozessors 205 mehrere Prozessoren vorgesehen.

Nach einer Ausführungsform ist vorgesehen, dass der Prozessor 205 eingerichtet ist, die vor- und/oder nachstehend beschriebenen Schritte des Erzeugens und/oder des Prüfens und/oder des Bestimmens auszuführen.

Die Vorrichtung 201 ist zum Beispiel Teil einer Infrastruktur, insbesondere Cloud-Infrastruktur.

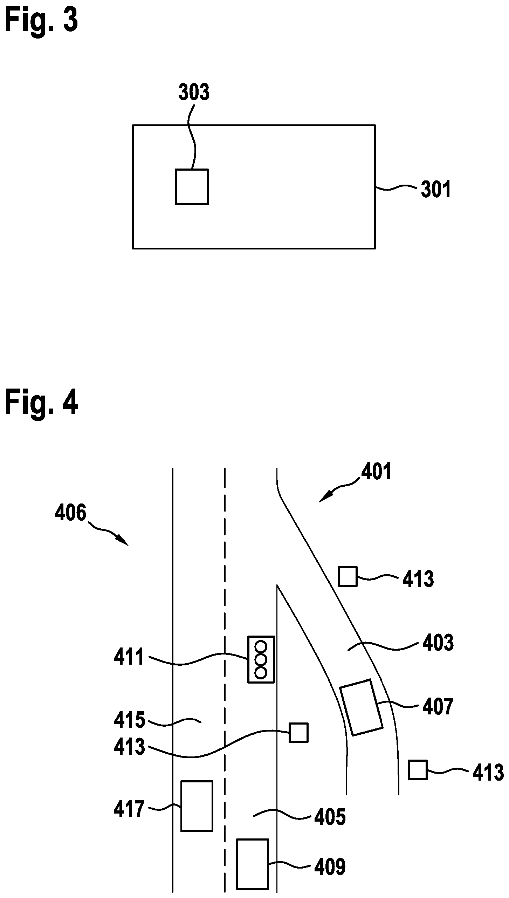

Fig. 3 zeigt ein maschinenlesbares Speichermedium 301.

Auf dem maschinenlesbaren Speichermedium 301 ist ein Computerprogramm 303 gespeichert, welches Befehle umfasst, die bei Ausführung des Computerprogramms 303 durch einen Computer diesen veranlassen, ein Verfahren gemäß dem ersten Aspekt auszuführen.

Nach einer Ausführungsform umfasst die Vorrichtung 201 eine Fernsteuerungseinrichtung, welche eingerichtet ist, Kraftfahrzeuge fernzusteuern. Die Fernsteuerungseinrichtung ist also insbesondere eingerichtet, das Kraftfahrzeug basierend auf den erzeugten Fernsteuersignalen fernzusteuern respektive das weitere Kraftfahrzeug basierend auf den Fernsteuerbefehlen fernzusteuern.

Gemäß einer Ausführungsform ist eine Infrastruktur oder ist ein Infrastruktursystem vorgesehen, welche respektive welches zum Beispiel die Vorrichtung nach dem zweiten Aspekt umfasst.

Die Infrastruktur umfasst zum Beispiel eine Autobahnauffahrt.

Fig. 4 zeigt eine erste Autobahnauffahrt 401.

Die Autobahnauffahrt 401 umfasst einen Beschleunigungsstreifen oder Einfädelungsstreifen 403.

Der Beschleunigungsstreifen 403 mündet in einen Fahrstreifen 405 einer Autobahn 406.

Auf dem Einfädelungsstreifen oder Beschleunigungsstreifen 403 fährt ein erstes Kraftfahrzeug 407. Das erste Kraftfahrzeug 407 will auf den Fahrstreifen 405 einfädeln.

Auf dem Fahrstreifen 405 fährt ein zweites, also ein weiteres, Kraftfahrzeug 409.

Oberhalb des Fahrstreifens 405 ist eine Lichtsignalanlage 411 vorgesehen.

Im Umfeld des Einfädelungsstreifens 403 und des Fahrstreifens 405 sind mehrere Umfeldsensoren 413 räumlich verteilt angeordnet.

Diese Umfeldsensoren 413 erfassen ihr jeweiliges Umfeld und stellen dem erfassten Umfeld entsprechende Umfeldsensordaten bereit.

Die Umgebungssignale basieren zum Beispiel auf den Umfeldsensordaten respektive umfassen die Umfeldsensordaten.

Basierend auf der jeweiligen Erfassung kann zum Beispiel das einzufädelnde Kraftfahrzeug 407, also das erste Kraftfahrzeug 407, detektiert werden. Basierend auf der jeweiligen Erfassung kann zum Beispiel das zweite Kraftfahrzeug 409 detektiert werden.

Zum Beispiel ist vorgesehen, dass bei Detektion des einzufädelnden Kraftfahrzeugs 407 die Lichtsignalanlage 411 derart gesteuert wird, dass sie die Fahrspur 405 für das zweite Kraftfahrzeug 409 optisch sperrt.

Das heißt also insbesondere, dass dann das zweite Kraftfahrzeug 409 auf eine benachbarte Fahrspur 415 wechseln muss. Dann kann das erste Kraftfahrzeug 407 effizient einfädeln in die Fahrspur 405.

Beispielhaft ist ein noch ein weiteres Kraftfahrzeug, ein drittes Kraftfahrzeug 417, eingezeichnet, welches auf der benachbarten Fahrspur 415 fährt. Damit das zweite Kraftfahrzeug 409 einen sicheren Fahrstreifenwechsel durchführen kann, kann zum Beispiel eine Fahrvorgabe für das dritte Kraftfahrzeug 417 ein Abbremsen oder ein Beschleunigen umfassen.

Ein Umfeldsensor im Sinne der Beschreibung ist beispielsweise einer der folgenden Umfeldsensoren: Videosensor, Infrarotsensor, Magnetfeldsensor, Lidarsensor, Ultraschallsensor und Radarsensor.

Basierend auf der jeweiligen Erfassung, also insbesondere basierend auf den entsprechenden Umgebungssignalen, werden dann die Fernsteuersignale, wie vorstehend und/oder nachstehend beschrieben, erzeugt und ausgegeben, sodass das erste Kraftfahrzeug 407 zumindest assistiert in die Fahrspur 405 eingefädelt werden kann.

Zur Unterstützung des assistierten Einfädelns ist vorgesehen, dass dem zweiten, also dem weiteren, Kraftfahrzeug 409 eine Vorgabe vorgegeben wird. Die Vorgabe umfasst zum Beispiel eine Fahrvorgabe. Die Fahrvorgabe gibt zum Beispiel vor, dass das Kraftfahrzeug seine Geschwindigkeit reduzieren soll respektive auf die benachbarte Fahrspur 415 wechseln soll.

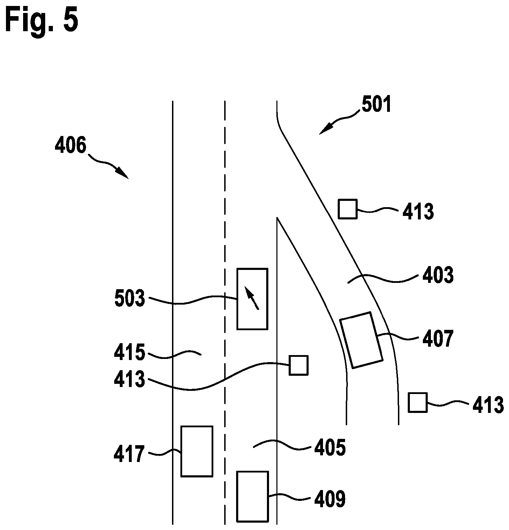

Fig. 5 zeigt eine zweite Autobahnauffahrt 501.

Die zweite Autobahnauffahrt 501 ist im Wesentlichen analog zur ersten Autobahnauffahrt 401 gebildet. Als ein Unterschied ist anstelle der Lichtsignalanlage 411 ein elektronisches Schild 503 vorgesehen, welches bei Detektion eines einzufädelnden Kraftfahrzeugs insbesondere derart gesteuert wird, dass das elektronische Schild 503 mittels einer Anzeigeeinrichtung (nicht gezeigt) dem zweiten Kraftfahrzeug 409 optisch signalisiert, dass es die Fahrspur 405 wechseln muss.

Zur Unterstützung des assistierten Einfädelns ist vorgesehen, dass dem zweiten, also dem weiteren, Kraftfahrzeug 409 eine Vorgabe vorgegeben wird. Die Vorgabe umfasst zum Beispiel eine Fahrvorgabe. Die Fahrvorgabe gibt zum Beispiel vor, dass das Kraftfahrzeug seine Geschwindigkeit reduzieren soll respektive auf die benachbarte Fahrspur 415 wechseln soll.

Dann ist also in analoger Weise zur Lichtsignalanlage 411 die Fahrspur 405, in welche das erste Kraftfahrzeug 407 einfädeln will, frei von einem Verkehr.

Dadurch kann dann das Einfädeln in effizienter Weise entfernt durchgeführt werden.

Obwohl es so aussehen könnte, dass sich die Lichtsignalanlage 411 und das elektronische Schild 503 auf der Fahrspur 405 befinden, so soll an dieser Stelle klargestellt werden, dass dem nicht so ist. Vielmehr sind die die Lichtsignalanlage 411 und das elektronische Schild 503 oberhalb der Fahrspur 405 angeordnet.

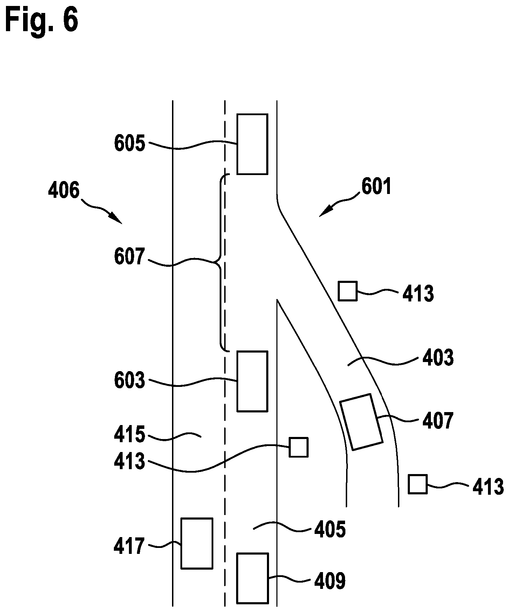

Fig. 6 zeigt eine dritte Autobahnauffahrt 601.

Die dritte Autobahnauffahrt 601 ist im Wesentlichen analog zur ersten Autobahnauffahrt 401 respektive zweiten Autobahnauffahrt 501 gebildet. Als ein Unterschied sind weder eine Lichtsignalanlage 411 noch ein elektronisches Schild 503 vorgesehen.

Beispielhaft sind weitere Kraftfahrzeuge, ein viertes Kraftfahrzeug 603 und ein fünftes Kraftfahrzeug 605, gezeichnet, welche auf der Fahrspur 405 fahren.

Diese zwei sich auf dem Fahrstreifen bzw. Fahrspur 405 befindenden und hintereinander fahrenden weiteren Kraftfahrzeuge, das vierte Kraftfahrzeug 603 und das fünfte Kraftfahrzeug 605, wird eine jeweilige Fahrvorgabe vorgegeben, welche derart ist, dass durch das Abfahren der jeweiligen Fahrvorgabe mittels des jeweiligen weiteren Kraftfahrzeugs 603, 605 zwischen den zwei weiteren Kraftfahrzeugen 603, 605 eine Lücke gebildet wird, in welche das einzufädelnde Kraftfahrzeug 407 einfädeln kann.

Die Lücke zwischen dem vierten Kraftfahrzeug 603 und dem fünften Kraftfahrzeug 605 ist mit einer geschweiften Klammer mit dem Bezugszeichen 607 gekennzeichnet.

Zum Beispiel kann dem vierten Kraftfahrzeug 603 vorgegeben werden, dass es seine Geschwindigkeit reduzieren soll. Zum Beispiel kann dem fünften Kraftfahrzeug 605 vorgeben werden, dass es seine Geschwindigkeit erhöhen soll, insbesondere im Rahmen einer zulässigen Höchstgeschwindigkeit.

Zum Beispiel kann dem zweiten Kraftfahrzeug 409 vorgegeben werden, dass es seine Geschwindigkeit reduzieren soll, um einen ausreichenden Sicherheitsabstand zum dritten Kraftfahrzeug 603 zu wahren.

Zum Beispiel kann dem dritten Kraftfahrzeug 417 vorgegeben werden, dass es keinen Fahrstreifenwechsel durchführen darf.

Die erzeugten Fernsteuersignale sind insbesondere derart, dass bei einem Fernsteuern der Quer- und/oder Längsführung des Kraftfahrzeugs 407 basierend auf den Fernsteuersignalen das Kraftfahrzeug 407 in die Lücke 607 eingefädelt wird.

Nach einer Ausführungsform ist eine Voraussetzung für das Fernsteuern von Kraftfahrzeugen, also insbesondere für das Fernsteuern des Kraftfahrzeugs respektive des weiteren Kraftfahrzeugs, respektive für den Eingriff, dass das Fernsteuern sicher ist. "Sicher" bedeutet im Sinne der Beschreibung insbesondere "safe" und "secure". Diese beiden englischen Begriffe werden zwar ins Deutsche üblicherweise mit "sicher" übersetzt. Dennoch haben diese im Englischen eine teilweise unterschiedliche Bedeutung.

Der Begriff "safe" ist insbesondere auf das Thema Unfall und Unfallvermeidung gerichtet. Ein Fernsteuern, was "safe" ist, bewirkt insbesondere, dass eine Wahrscheinlichkeit für einen Unfall bzw. eine Kollision kleiner oder kleiner-gleich einem vorbestimmten Wahrscheinlichkeitsschwellwert ist.

Der Begriff "secure" ist insbesondere auf das Thema Computerschutz bzw. Hackerschutz gerichtet, also insbesondere wie sicher ist in eine (Computer)-Infrastruktur und/oder eine Kommunikationsinfrastruktur, insbesondere eine Kommunikationsstrecke zwischen Kraftfahrzeug und einer Fernsteuerungseinrichtung zum Fernsteuern eines Kraftfahrzeugs, vor unbefugten Zugriffen bzw. vor Datenmanipulationen durch Dritte ("Hacker") gesichert.

Ein Fernsteuern, was "secure" ist, hat also insbesondere als Grundlage einen angemessenen und ausreichenden Computerschutz bzw. Hackerschutz.

Zum Beispiel wird gemäß einer Ausführungsform überprüft, ob die Gesamtheit aus Kraftfahrzeug respektive weiterem Kraftfahrzeug und am Verfahren nach dem ersten Aspekt beteiligter Infrastruktur einschließlich einer Kommunikation zwischen Infrastruktur und Kraftfahrzeug aktuell für das hier beschriebene Konzept "Eingriff in das Kraftfahrzeug respektive weitere Kraftfahrzeug für kritische Aktionen" sicher ist. Das heißt also insbesondere, dass das Kraftfahrzeug respektive das weitere Kraftfahrzeug und/oder eine lokale und/oder eine globale Infrastruktur und/oder eine Kommunikation entsprechend überprüft werden. Die Fernsteuersignale respektive Vorgabesignale werden insbesondere basierend auf einem Ergebnis des Überprüfens erzeugt.

Das heißt also insbesondere, dass die Komponenten, welche bei der Ausführung des Verfahrens nach dem ersten Aspekt verwendet werden, auf Sicherheit überprüft werden, also ob diese bestimmte Sicherheitsbedingungen erfüllen, bevor der Eingriff in den Fahrbetrieb durchgeführt wird, also das Kraftfahrzeug respektive das weitere Kraftfahrzeug ferngesteuert wird.

Wichtige, respektive abhängige Kriterien sind zum Beispiel eine oder mehrere der vorstehend beschriebenen Sicherheitsbedingungen.

Nach einer Ausführungsform ist vorgesehen, dass zum einen das Gesamtsystem (Kraftfahrzeug respektive weiteres Kraftfahrzeug, Infrastruktur, Kommunikationsstrecke, Cloud ...) hinsichtlich der Sicherheitsbedingung überprüft wird.

Nach einer Ausführungsform ist vorgesehen, dass auch die einzelnen Teile hinsichtlich eines Erfüllens der Sicherheitsbedingung überprüft werden. Dies insbesondere vor einem Fernsteuern des Kraftfahrzeugs respektive weiteren Kraftfahrzeugs.

Der oder die Schritte des Überprüfens werden dabei in einer Ausführungsform kraftfahrzeugintern und/oder kraftfahrzeugextern, insbesondere in einer Infrastruktur, ausgeführt.

Nach einer Ausführungsform ist vorgesehen, dass der oder die Schritte des Prüfens im Nachgang, also zu einem späteren Zeitpunkt, beispielsweise regelmäßig, überprüft werden. Zum Beispiel werden der oder die Schritte des Überprüfens im Nachgang mit einer vorbestimmten Frequenz, beispielsweise alle 100 ms, überprüft.

Beispielsweise findet dieses Überprüfen, also das Überprüfen, ob die zumindest eine Sicherheitsbedingung erfüllt ist, gemäß einer Ausführungsform vor und/oder nach und/oder während eines oder mehrerer vorbestimmter Verfahrensschritte statt.

Nach einer Ausführungsform wird das Überprüfen bei Problemen durch- oder ausgeführt.

Zusammenfassend basiert das hier beschriebene Konzept insbesondere darauf, dass das einzufädelnde Kraftahrzeug als auch weitere zumindest teilautomatisiert geführte Kraftfahrzeuge, insbesondere auf eine Autobahn, "SAFE" und "SECURE" kontrolliert respektive ferngesteuert werden.

In einer Ausführungsform ist vorgesehen, dass die Kraftfahrzeuge, insbesondere auf der Autobahn, die kontrolliert respektive ferngesteuert werden können, dem Infrastruktursystem bekannt sind (d.h., dass das Infrastruktursystem weiß, wo welches Kraftahrzeug ist, fährt, ...). Des Weiteren ist insbesondere vorgesehen, dass das Infrastruktursystem die Szenen analysiert und den Verkehr managen kann.

Dabei wird gemäß einer Ausführungsform ein Mix-Verkehr (Misch-Verkehr) vorausgesetzt. D.h., es fahren auch Kraftfahrzeuge, insbesondere auf der Autobahn, die nicht kontrolliert respektive ferngesteuert werden können.

In einer Ausführungsform wird das einzufädelnde Kraftfahrzeug so ferngesteuert, dass es in eine Lücke, insbesondere auf die Autobahn, einfädelt.

In einer weiteren Ausführungsform werden die weiteren Kraftfahrzeuge, welche ferngesteuert werden können, insbesondere auf der Autobahn, so ferngesteuert, dass eine Lücke entsteht, und des Weiteren ist dann insbesondere vorgesehen, dass dann das einzufädelnde Kraftfahrzeug so ferngesteuert wird, dass es in die geplante / geschaffene Lücke einfädelt.

In einer weiteren Ausführungsform werden Kraftfahrzeugen, welche nicht ferngesteuert werden könne, Pfade gesendet / vorgegeben, die diese (der Fahrer) abfahren soll, damit die Lücke generiert wird.

In einer weiteren Ausführungsform kann ein Verkehrsleitsystem entsprechend gesteuert werden, um das assistierte Einfädeln zu unterstützen. Dies ist insbesondere bei Kraftfahrzeugen vorteilhaft, welche nicht ferngesteuert werden können.

## Patentansprüche

1. Computerimplementiertes Verfahren zum zumindest assistierten Einfädeln eines Kraftfahrzeugs (407) in einen Fahrstreifen (405), umfassend die folgenden Schritte:
Bestimmen (101), dass ein Kraftfahrzeug (407) in den Fahrstreifen (405) eingefädelt werden soll,
Empfangen (103) von Umgebungssignalen, welche eine den Fahrstreifen (405) zumindest teilweise umfassende Umgebung des Kraftfahrzeugs (407) repräsentieren,
Erzeugen (105) von Fernsteuersignalen zum Fernsteuern einer Quer- und/oder Längsführung des Kraftfahrzeugs (407) basierend auf den Umgebungssignalen, um bei einem Fernsteuern basierend auf den Fernsteuersignalen das Kraftfahrzeug (407) in den Fahrstreifen (405) zumindest assistiert einzufädeln, Ausgeben (107) der erzeugten Fernsteuersignale,
wobei die Umgebungssignale verarbeitet (109) werden, um ein sich in der Umgebung des Kraftfahrzeugs befindendes weiteres Kraftfahrzeug (409, 603, 605) zu detektieren,
wobei bei Detektion eines sich in der Umgebung des Kraftfahrzeugs befindenden weiteren Kraftfahrzeugs (409, 603, 605) Vorgabesignale erzeugt (111) werden, welche zumindest eine Vorgabe für das weitere Kraftfahrzeug (409, 603, 605) repräsentieren, um das assistierte Einfädeln des Kraftfahrzeugs (407) zu unterstützen,
wobei die erzeugten Vorgabesignale ausgegeben (113) werden,
wobei ein assistiertes Einfädeln umfasst, dass nur die Querführung oder nur die Längsführung des Kraftfahrzeugs (407) ferngesteuert wird oder sowohl die Querführung als auch die Längsführung des Kraftfahrzeugs (407) ferngesteuert werden.

2. Verfahren nach Anspruch 1, wobei die zumindest eine Vorgabe eine Fahrvorgabe umfasst, welche das weitere Kraftfahrzeug (409, 603, 605) abfahren soll.

3. Verfahren nach Anspruch 2, wobei die Fahrvorgabe Fernsteuerungsbefehle zum Fernsteuern einer Quer- und/oder Längsführung des weiteren Kraftfahrzeugs (409, 603, 605) umfasst.

4. Verfahren nach Anspruch 2 oder 3, wobei bei Detektion von zwei sich auf dem Fahrstreifen (405) befindenden und hintereinander fahrenden weiteren Kraftfahrzeugen (409, 603, 605) die jeweilige Fahrvorgabe für die zwei weiteren Kraftfahrzeuge (409, 603, 605) derart ist, dass durch das Abfahren der jeweiligen Fahrvorgabe mittels des jeweiligen weiteren Kraftfahrzeugs (409, 603, 605) zwischen den zwei weiteren Kraftfahrzeugen (409, 603, 605) eine Lücke (607) gebildet wird, in welche das einzufädelnde Kraftfahrzeug einfädeln kann, wobei die Fernsteuersignale derart sind, dass bei einem Fernsteuern der Quer- und/oder Längsführung des Kraftfahrzeugs basierend auf den Fernsteuersignalen das Kraftfahrzeug in die Lücke (607) fährt.

5. Verfahren nach einem der Ansprüche 2 bis 4, wobei die Fahrvorgabe ein Abbremsen oder ein Beschleunigen oder einen Fahrstreifenwechsel umfasst.

6. Verfahren nach einem der vorherigen Ansprüche, wobei basierend auf den Umgebungssignalen und basierend auf den Fernsteuersignalen Steuersignale zum Steuern eines Verkehrsleitsystems erzeugt und ausgegeben werden, um einen Verkehr im Umfeld des Kraftfahrzeugs mittels des Verkehrsleitsystems zu leiten, um das assistierte Einfädeln des Kraftfahrzeugs zu unterstützen.

7. Verfahren nach einem der vorherigen Ansprüche, wobei Sicherheitsbedingungssignale empfangen werden, welche zumindest eine Sicherheitsbedingung repräsentieren, welche erfüllt sein muss, damit das Kraftfahrzeug ferngesteuert werden darf und/oder ob einem sich in der Umgebung des Kraftfahrzeugs befindenden weiteren Kraftfahrzeug (409, 603, 605) eine Vorgabe vorgegeben werden darf, wobei geprüft wird, ob die zumindest eine Sicherheitsbedingung erfüllt ist, wobei die Fernsteuersignale und/oder die Vorgabesignale basierend auf einem Ergebnis des Prüfens, ob die zumindest eine Sicherheitsbedingung erfüllt ist, erzeugt werden.

8. Verfahren nach Anspruch 7, wobei die zumindest eine Sicherheitsbedingung jeweils ein Element ausgewählt aus der folgenden Gruppe von Sicherheitsbedingungen ist: Vorliegen eines vorbestimmten Sicherheitsintegritätsniveaus von zumindest dem Kraftfahrzeug (407) und einer Infrastruktur, insbesondere einschließlich einer Kommunikationsstrecke und/oder Kommunikationskomponenten, zum Fernsteuern eines Kraftfahrzeugs (407), insbesondere bzgl. dem Gesamtsystemen im Kraftfahrzeug (407) und Infrastruktur sowie insbesondere Teilen; z.B. Komponenten, Algorithmen, Schnittstellen, usw., Vorliegen einer maximalen Latenzzeit einer Kommunikation zwischen dem Kraftfahrzeug (407) und einer Fernsteuerungseinrichtung zum Fernsteuern des Kraftfahrzeugs (407) basierend auf den Fernsteuersignalen, Vorliegen eines vorbestimmten Computerschutzniveaus einer Vorrichtung zum Ausführen der Schritte des Verfahrens nach einem der vorherigen Ansprüche, Vorliegen von vorbestimmten Komponenten und/Algorithmen und/oder Kommunikationsmöglichkeiten, welche zur Ausführung der Schritte des Verfahrens nach einem der vorherigen Ansprüche verwendet werden, Vorliegen einer Redundanz und/oder Diversität bei vorbestimmten Komponenten und/Algorithmen und/oder Kommunikationsmöglichkeiten, welche zur Ausführung der Schritte des Verfahrens nach einem der vorherigen Ansprüche verwendet werden, Vorliegen von vorbestimmten Verfügbarkeitsangaben, welche eine Verfügbarkeit von vorbestimmten Komponenten und/Algorithmen und/oder Kommunikationsmöglichkeiten angeben, Vorliegen von vorbestimmten Qualitätskriterien der vorbestimmten Komponenten und/Algorithmen und/oder Kommunikationsmöglichkeiten, Vorliegen eines Plans, welcher Maßnahmen zur Reduktion von Fehlern und/oder Maßnahmen bei Ausfällen von vorbestimmten Komponenten und/oder Algorithmen und/oder Kommunikationsmöglichkeiten und/oder Maßnahmen zur Fehlanalysen und/oder Maßnahmen bei Fehlinterpretationen umfasst, Vorliegen eines oder mehrerer Fallback-Szenarien, Vorliegen einer vorbestimmten Funktion, Vorliegen einer vorbestimmten Verkehrssituation, Vorliegen eines vorbestimmten Wetters, maximal mögliche Zeit für eine jeweilige Durchführung respektive Ausführung eines Schrittes oder mehrerer Schritte des Verfahrens nach einem der vorherigen Ansprüche, Vorliegen eines Prüfergebnisses, dass Elemente respektive Funktionen, welche zur Ausführung des Verfahrens nach einem der vorherigen Ansprüche verwendet werden, momentan fehlerfrei funktionieren.

9. Vorrichtung (201), die eingerichtet ist, alle Schritte des Verfahrens nach einem der vorherigen Ansprüche auszuführen.

10. Computerprogramm (303), umfassend Befehle, die bei Ausführung des Computerprogramms (303) durch einen Computer diesen veranlassen, ein Verfahren gemäß einem der Ansprüche 1 bis 8 auszuführen.

11. Maschinenlesbares Speichermedium (301), auf dem das Computerprogramm (303) nach Anspruch 10 gespeichert ist.

## Claims

1. Computer-implemented method for at least assisted merging of a motor vehicle (407) into a lane (405), comprising the following steps:
ascertaining (101) that a motor vehicle (407) is meant to be merged into the lane (405),
receiving (103) surroundings signals representing surroundings of the motor vehicle (407) that cover at least part of the lane (405),
generating (105) remote control signals for remotely controlling lateral and/or longitudinal guidance of the motor vehicle (407) on the basis of the surroundings signals in order to merge the motor vehicle (407) into the lane (405) at least in an assisted manner during remote control on the basis of the remote control signals, and outputting (107) the generated remote control signals, wherein the surroundings signals are processed (109) in order to detect another motor vehicle (409, 603, 605) in the surroundings of the motor vehicle, wherein detection of another motor vehicle (409, 603, 605) in the surroundings of the motor vehicle results in specification signals being generated (111) that represent at least one specification for the other motor vehicle (409, 603, 605) in order to support the assisted merging of the motor vehicle (407), wherein the generated specification signals are output (113),
wherein assisted merging comprises only the lateral guidance or only the longitudinal guidance of the motor vehicle (407) being remotely controlled or both the lateral guidance and the longitudinal guidance of the motor vehicle (407) being remotely controlled.

2. Method according to Claim 1, wherein the at least one specification comprises a driving specification that the other motor vehicle (409, 603, 605) is meant to follow.

3. Method according to Claim 2, wherein the driving specification comprises remote control commands for remotely controlling lateral and/or longitudinal guidance of the other motor vehicle (409, 603, 605).

4. Method according to Claim 2 or 3, wherein detection of two other motor vehicles (409, 603, 605) travelling in succession in the lane (405) results in the respective driving specification for the two other motor vehicles (409, 603, 605) being such that when the respective driving specification is followed by the respective other motor vehicle (409, 603, 605), a gap (607) into which the motor vehicle to be merged can merge is formed between the two other motor vehicles (409, 603, 605), the remote control signals being such that remote control of the lateral and/or longitudinal guidance of the motor vehicle on the basis of the remote control signals results in the motor vehicle moving into the gap (607).

5. Method according to one of Claims 2 to 4, wherein the driving specification comprises braking or acceleration or a lane change.

6. Method according to one of the preceding claims, wherein control signals for controlling a traffic control system are generated and output on the basis of the surroundings signals and on the basis of the remote control signals in order to direct traffic in the vicinity of the motor vehicle by means of the traffic control system in order to support the assisted merging of the motor vehicle.

7. Method according to one of the preceding claims, wherein safety condition signals are received that represent at least one safety condition that must be met in order for the motor vehicle to be able to be remotely controlled and/or whether another motor vehicle (409, 603, 605) in the surroundings of the motor vehicle may be provided with a specification, a check being performed to ascertain whether the at least one safety condition is met, the remote control signals and/or the specification signals being generated on the basis of a result of the check to ascertain whether the at least one safety condition is met.

8. Method according to Claim 7, wherein each of the at least one safety conditions is an element selected from the following group of safety conditions:
presence of a predetermined safety integrity level of at least the motor vehicle (407) and an infrastructure, in particular including a communication link and/or communication components, for remotely controlling a motor vehicle (407), in particular with regard to all of the systems in the motor vehicle (407) and infrastructure, and in particular parts; e.g. components, algorithms, interfaces, etc., presence of a maximum latency of a communication between the motor vehicle (407) and a remote control device for remotely controlling the motor vehicle (407) on the basis of the remote control signals, presence of a predetermined computer protection level of a device for performing the steps of the method according to one of the preceding claims, presence of predetermined components and/ algorithms and/or communication options that are used for performing the steps of the method according to one of the preceding claims, presence of a redundancy and/or diversity for predetermined components and/ algorithms and/or communication options that are used for performing the steps of the method according to one of the preceding claims, presence of predetermined availability information indicating an availability of predetermined components and/ algorithms and/or communication options, presence of predetermined quality criteria for the predetermined components and/ algorithms and/or communication options, presence of a plan comprising measures for reducing errors and/or measures for failures of predetermined components and/or algorithms and/or communication options and/or measures for analysis errors and/or measures for interpretation errors, presence of one or more fallback scenarios, presence of a predetermined function, presence of a predetermined traffic situation, presence of a predetermined weather, maximum possible time for a particular performance or execution of a step or multiple steps of the method according to one of the preceding claims, presence of a check result that elements or functions that are used for carrying out the method according to one of the preceding claims are currently functioning correctly.

9. Device (201) configured to perform all the steps of the method according to one of the preceding claims.

10. Computer program (303) comprising instructions that, when the computer program (303) is executed by a computer, cause said computer to carry out a method according to one of Claims 1 to 8.

11. Machine-readable storage medium (301) on which the computer program (303) according to Claim 10 is stored.

## Revendications

1. Procédé mis en œuvre par ordinateur permettant au moins d'assister l'insertion d'un véhicule à moteur (407) dans une voie de circulation (405), comprenant les étapes suivantes :
détermination (101) qu'un véhicule à moteur (407) est censé s'insérer dans la voie de circulation (405),
réception (103) de signaux d'environnement qui représentent un environnement du véhicule à moteur (407) comprenant au moins en partie la voie de circulation (405),
génération (105) de signaux de commande à distance pour la commande à distance d'un guidage transversal et/ou longitudinal du véhicule à moteur (407) sur la base des signaux d'environnement pour, lors d'une commande à distance sur la base des signaux de commande à distance, au moins assister l'insertion du véhicule à moteur (407) dans la voie de circulation (405), émission (107) des signaux de commande à distance générés,
les signaux d'environnement étant traités (109) pour détecter un autre véhicule à moteur (409, 603, 605) se trouvant dans l'environnement du véhicule à moteur,
des signaux de spécification étant générés (111), lesquels représentent au moins une spécification pour l'autre véhicule à moteur (409, 603, 605) pour soutenir l'assistance à l'insertion du véhicule à moteur (407), lors de la détection d'un autre véhicule à moteur (409, 603, 605) se trouvant dans l'environnement du véhicule à moteur,
les signaux de spécification générés étant émis (113),
l'assistance à l'insertion comprenant la commande à distance seulement du guidage transversal ou seulement du guidage longitudinal du véhicule à moteur (407) ou la commande à distance à la fois du guidage transversal et du guidage longitudinal du véhicule à moteur (407).

2. Procédé selon la revendication 1, l'au moins une spécification comprenant une spécification de conduite que l'autre véhicule à moteur (409, 603, 605) doit laisser.

3. Procédé selon la revendication 2, la spécification de conduite comprenant des instructions de commande à distance pour commander à distance un guidage transversal et/ou longitudinal de l'autre véhicule à moteur (409, 603, 605).

4. Procédé selon la revendication 2 ou 3, la spécification de conduite respective pour les deux autres véhicules à moteur (409, 603, 605) étant, lorsque deux autres véhicules à moteur (409, 603, 605) se trouvent sur la voie de circulation (405) et se déplacent l'un derrière l'autre, telle qu'un intervalle (607), dans lequel le véhicule à moteur devant s'insérer peut s'insérer, est formé entre les deux autres véhicules à moteur (409, 603, 605) du fait de la sortie de la spécification de conduite respective au moyen de l'autre véhicule à moteur (409, 603, 605) respectif, les signaux de commande à distance étant tels que, lors d'une commande à distance du guidage transversal et/ou longitudinal du véhicule à moteur sur la base des signaux de commande à distance, le véhicule à moteur se déplace dans l'intervalle (607).

5. Procédé selon l'une des revendications 2 à 4, la spécification de conduite comprenant un ralentissement ou une accélération ou un changement de voie de circulation.

6. Procédé selon l'une des revendications précédentes, des signaux de commande pour la commande d'un système de gestion du trafic étant générés et émis sur la base des signaux d'environnement et sur la base des signaux de commande à distance pour guider un trafic dans l'environnement du véhicule à moteur au moyen du système de gestion du trafic pour soutenir l'assistance à l'insertion du véhicule à moteur.

7. Procédé selon l'une des revendications précédentes, des signaux de condition de sécurité étant reçus, lesquels représentent au moins une condition de sécurité qui doit être satisfaite pour que le véhicule à moteur puisse être commandé à distance et/ou si une spécification peut être spécifiée à un autre véhicule à moteur (409, 603, 605) se trouvant dans l'environnement du véhicule à moteur, le fait de savoir si l'au moins une condition de sécurité est satisfaite étant vérifié, les signaux de commande à distance et/ou les signaux de spécification étant générés sur la base d'un résultat de la vérification pour savoir si l'au moins une condition de sécurité est satisfaite.

8. Procédé selon la revendication 7, l'au moins une condition de sécurité étant respectivement un élément choisi dans le groupe suivant de conditions de sécurité : présence d'un niveau d'intégrité de sécurité prédéterminé d'au moins le véhicule à moteur (407) et d'une infrastructure, y compris en particulier d'une voie de communication et/ou de composants de communication, pour commander à distance un véhicule à moteur (407), en particulier en ce qui concerne les systèmes globaux du véhicule à moteur (407) et l'infrastructure et en particulier de pièces ; par exemple composants, algorithmes, interfaces, etc., présence d'un temps de latence de communication maximal entre le véhicule à moteur (407) et un système de commande à distance pour commander à distance le véhicule à moteur (407) sur la base des signaux de commande à distance, présence d'un niveau de protection informatique prédéterminé d'un dispositif destiné à exécuter les étapes du procédé selon l'une des revendications précédentes, présence de composants et/ou algorithmes et/ou possibilités de communication prédéterminés, qui sont utilisés pour exécuter les étapes du procédé selon l'une des revendications précédentes, présence de redondance et/ou de diversité dans le cas de composants et/ou algorithmes et/ou possibilités de communication prédéterminés, qui sont utilisés pour exécuter les étapes du procédé selon l'une des revendications précédentes, présence d'indications de disponibilité prédéterminées, qui indiquent une disponibilité de composants et/ou algorithmes et/ou possibilités de communication prédéterminés, présence de critères de qualité prédéterminés des composants et/ou algorithmes et/ou possibilités de communication prédéterminés, présence d'un plan qui comprend des mesures de réduction des erreurs et/ou des mesures en cas de défaillance de composants et/ou algorithmes et/ou possibilités de communication prédéterminés et/ou des mesures d'analyse d'erreur et/ou des mesures en cas d'interprétation erronée, présence d'un ou plusieurs scénarios de repli, présence d'une fonction prédéterminée, présence d'une situation de trafic prédéterminée, présence d'une météo prédéterminée, temps maximum possible pour une mise en œuvre ou une exécution respective d'une étape ou de plusieurs étapes du procédé selon l'une des revendications précédentes, présence d'un résultat de test que les éléments ou fonctions, qui sont utilisés pour exécuter le procédé selon l'une des revendications précédentes, fonctionnent actuellement sans erreur.

9. Dispositif (201), qui est mis au point pour exécuter toutes les étapes du procédé selon l'une des revendications précédentes.

10. Programme informatique (303), comprenant des instructions qui, lorsque le programme informatique (303) est exécuté par un ordinateur, amènent celui-ci à exécuter un procédé selon l'une des revendications 1 à 8.

11. Support de stockage (301) lisible par machine, sur lequel est stocké le programme informatique (303) selon la revendication 10.
